# EUROPÄISCHE PATENTSCHRIFT

(11) **EP 0 574 834 B1**
(45) Veröffentlichungstag und Bekanntmachung des Hinweises auf die Patenterteilung: **30.10.1996**
(21) Anmeldenummer: 93109333.0
(22) Anmeldetag: 11.06.1993
(51) Int. Cl.: B65G 61/00

(54) **Palettiervorrichtung**
Palettiser
Palettiseur

(30) Priorität: 19.06.1992 DE 9208192 U
(43) Veröffentlichungstag der Anmeldung: 22.12.1993
(73) Patentinhaber: MSK-Verpackungs-Systeme Gesellschaft mit beschränkter Haftung, D-47515 Kleve (DE)
(72) Erfinder: Hannen, Reiner Wilhelm, D-4180 Goch 2 Pfalzdorf (DE); Vermeulen, Peter Norbert, 4190 Kleve-Warbeyen (DE)
(74) Vertreter: Stark, Walter, Dr.-Ing.

(56) Entgegenhaltungen:
- DE-A- 2 805 290
- DE-A- 3 926 670
- DE-C- 1 164 625
- DE-U- 9 208 192
- FR-A- 2 506 275

## Beschreibung

Die Erfindung betrifft eine Palettiervorrichtung mit einem Rahmen aus vertikalen Rahmenstäben und diese verbindenden horizontalen Traversen, an denen ein Wagen verfahrbar ist, der einen vertikal bewegbaren Hubschlitten mit einem Werkzeugaufnahmekopf trägt, wobei dem Hubschlitten ein Kontergewicht zugeordnet ist und der Hubschlitten eine Umlenkrolle für ein Zugelement aufweist, das über weitere Umlenkrollen geführt ist.

Beim Palettieren von Stückgütern mit Hilfe von Palettiervorrichtungen müssen große Lasten auf kurzen Wegen schnell auf und ab bzw. hin und her bewegt werden. Wegen der kurzen Wege ist es schwierig, höhere Geschwindigkeiten zu erreichen, weil dazu entsprechende Beschleunigungs- und Verzögerungswege benötigt werden. Ein harmonischer, verschleißarmer Arbeitsablauf läßt sich deshalb nur bei entsprechendem Gewichtsausgleich erreichen. Dazu wird dem Hubschlitten, der über den Werkzeugaufnahmekopf das Stückgut trägt, das Kontergewicht zugeordnet.

Bei einer aus der Praxis bekannten Palettiervorrichtung ist das Kontergewicht am Hubschlitten angeordnet. Es wird folglich nicht nur bei der vertikalen Bewegung des Hubschlittens bewegt, sondern auch dann, wenn der Hubschlitten mit dem Wagen horizontal verfahren wird. Der Antrieb des Wagens muß dementsprechend auch die Last des Kontergewichtes beschleunigen, bewegen und verzögern. Dadurch ergibt sich nicht nur ein höherer Verschleiß der Bauteile, sondern es müssen auch höhere Antriebsleistungen installiert werden, die einen höheren Energieverbrauch bedingen.

Bei einer Palettiervorrichtung der eingangs beschriebenen Gattung (DE-A 28 05 290) ist das Zugmittel auch über eine Umlenkrolle des Kontergewichtes geführt und es sind beide Enden des Zugmittels am Wagen befestigt. Blockierungseinrichtungen ermöglichen es, einerseits den Wagen zu verfahren und andererseits den Hubschlitten zu bewegen. Ferner ist es bekannt(FR-A-25 06 275), das Kontergewicht an einem Ende des über eine Antriebsrolle geführten Zugseils zu befestigen.

Aufgabe der Erfindung ist es, bei einer Palettiervorrichtung die bewegten Massen und die damit erforderlichen Antriebsleistungen zu reduzieren.

Diese Aufgabe wird dadurch gelöst, daß beide Enden des Zugmittels an Kontergewichten befestigt und über Antriebsrollen geführt sind und daß die Kontergewichte am Rahmen geführt sind. Damit nehmen die Kontergewichte an der Horizontalbewegung des Wagens nicht mehr teil. Der Antrieb des Wagens kann dementsprechend leichter ausgeführt werden und benötigt weniger Energie.

Für den Vertikalantrieb des Hubschlittens kann eine der rahmenfesten Umlenkrollen als Antriebsrolle für das Zugelement ausgebildet sein und einen Antrieb aufweisen. Um eine störungsfreie Übertragung der Antriebsleistung zu gewährleisten, sollte das Zugmittel ein Zahnriemen sein und sollte wenigstens die Antriebsrolle als formschlüssig in den Zahnriemen eingreifende Zahnrolle ausgebildet sein. Bevorzugt soll die Antriebsrolle derart angeordnet sein, daß der Umschlingungswinkel des Zugmittels auf der Antriebsrolle 180° beträgt.

Bei einer bevorzugten Ausführung der Erfindung ist das Zugmittel an einem Ende des Verfahrweges des Wagens am Rahmen befestigt und sind die Kontergewichte in einem hohlen Rahmenstab am anderen Ende des Verfahrweges des Wagens geführt. Damit sind die Kontergewichte geschützt untergebracht und der Wagen kann über die gesamte Länge der Traverse verfahren werden, ohne daß dabei die Kontergewichte bewegt werden.

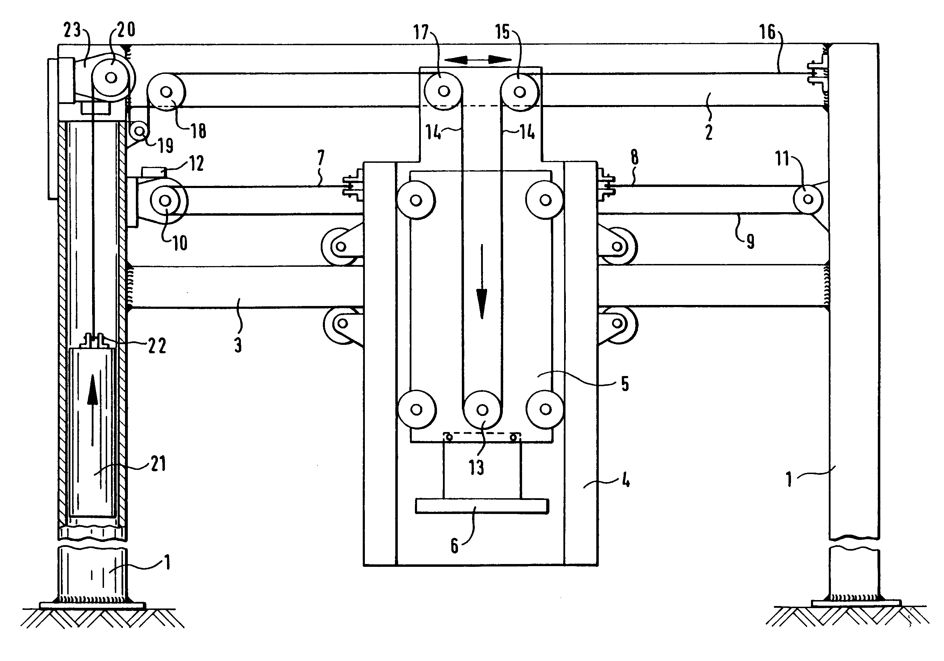

Im folgenden wird ein in der Zeichnung dargestellten Ausführungsbeispiel der Erfindung erläutert; die einzige Figur zeigt schematisch und teilweise eine Palettiervorrichtung.

Zu der dargestellten Palettiervorrichtung gehört ein Rahmen mit vertikalen Rahmenstäben 1 und diese verbindenden horizontalen Traversen 2, 3.

Auf der unteren Traverse 3 ist ein Wagen 4 geführt und horizontal verfahrbar. Am Wagen 4 ist vertikal bewegbar ein Hubschlitten 5 geführt, der am unteren Ende einen Werkzeugaufnahmekopf 6 aufweist, an dem ein Werkzeug zum Beispiel zum Aufnehmen eines Stückgutes angeordnet werden kann.

An beiden Seiten des Wagens 4 sind bei 7 und 8 die Enden eines Zugmittels 9, z.B. eines Riemens, befestigt, das über Umlenkrollen 10, 11 an den Rahmenstäben 1 geführt ist. Die Umlenkrolle 10 an dem in Figur linken Rahmenstab 1 ist eine Antriebsrolle, der ein Antrieb 12 zugeordnet ist. Durch Betätigen des Antriebs kann der Wagen 4 in horizontaler Richtung längs der Traverse 3 verfahren werden.

Am Hubschlitten 5 ist eine Umlenkrolle 13 für einen darüber geführten Zahnriemen 14 gelagert, dessen eines Ende über eine am Wagen 4 gelagerte Umlenkrolle 15 und von dort längs der Traverse 2 bis zum in der Figur rechten Rahmenstab 1 geführt und dort bei 16 befestigt ist. Das andere Ende des Zahnriemens 14 wird über eine am Wagen 4 gelagerte Umlenkrolle 17 und von dort längs der Traverse 2 zu einer weiteren Umlenkrolle 18 geführt, über die es vertikal nach unten abgelenkt wird, wobei es eine weitere Umlenkrolle 19 umschlingt, dann weiter vertikal nach oben über eine Antriebsrolle 20 geführt ist, die es mit einem Winkel von 180 ° umschlingt. Schließlich führt dieses freie Ende des Zahnriemens 14 zu einem Kontergewicht 21, an dem es bei 22 befestigt ist. Das Kontergewicht 21 ist vertikal beweglich in dem zu diesem Zweck hohl ausgebildeten Rahmenstab 1 geführt. Die Antriebsrolle 20 ist als formschlüssig in den Zahnriemen 14 eingreifende Zahnrolle ausgebildet. Sie kann mittels eines zugeordneten Antriebs 23 in Drehung versetzt werden, wodurch einerseits das Kontergewicht 21 auf- bzw. ab und andererseits der Hubschlitten ab- bzw. auf bewegt werden. Bei einer Horizontalbewegung des Wagens 4 wird das Kontergewicht 21 nicht bewegt.

## Patentansprüche

1. Palettiervorrichtung mit einem Rahmen aus vertikalen Rahmenstäben (1) und diese verbindenden horizontalen Traversen (2, 3), an denen ein Wagen (4) verfahrbar ist, der einen vertikal bewegbaren Hubschlitten (5) mit einem Werkzeugaufnahmekopf (6) trägt, wobei dem Hubschlitten (5) ein Kontergewicht (21) zugeordnet ist und der Hubschlitten (5) eine Umlenkrolle (13) für ein Zugelement (14) aufweist, das über weitere Umlenkrollen (15 bis 20) geführt ist, dadurch gekennzeichnet, daß beide Enden des Zugmittels (14) an Kontergewichten (21) befestigt und über Antriebsrollen (20) geführt sind und daß die Kontergewichte (21) am Rahmen (1, 2, 3) geführt sind.

2. Palettiervorrichtung nach Anspruch 1, dadurch gekennzeichnet, daß eine der rahmenfesten Umlenkrollen als Antriebsrolle (20) für das Zugelement (14) ausgebildet ist und einen Antrieb (23) aufweist.

3. Palettiervorrichtung nach Anspruch 1 oder 2, dadurch gekennzeichnet, daß das Zugmittel (14) ein Zahnriemen ist und daß wenigstens die Antriebsrolle (20) als formschlüssig in den Zahnriemen eingreifende Zahnrolle ausgebildet ist.

4. Palettiervorrichtung nach einem der Ansprüche 1 bis 4, dadurch gekennzeichnet, daß die Antriebsrolle (20) derart angeordnet ist, daß der Umschlingungswinkel des Zugmittels (14) auf der Antriebsrolle (20) 180° beträgt.

5. Palettiervorrichtung nach einem der Ansprüche 1 bis 3, dadurch gekennzeichnet, daß das Zugmittel (14) an einem Ende des Verfahrweges des Wagens (4) am Rahmen (1, 2, 3) befestigt ist und daß die Kontergewichte (21) in einem hohlen Rahmenstab (1) am anderen Ende des Verfahrweges des Wagens (4) geführt sind.

## Claims

1. Palletising apparatus, including a frame formed from vertical frame bars (1) and horizontal cross-piece members (2, 3), which connect said bars and along which a carriage (4) is displaceable, which carriage carries a vertically displaceable lifting carrier (5) provided with a tool receiving head (6), a counterweight (21) being associated with the lifting carrier (5), and the lifting carrier (5) having a guide roller (13) for guiding a tensioning means (14), which is guided via additional guide rollers (15 to 20), characterised in that both ends of the tensioning means (14) are secured to counterweights (21) and guided via drive rollers (20), and in that the counterweights (21) are guided on the frame (1, 2, 3).

2. Palletising apparatus according to claim 1, characterised in that one of the guide rollers integral with the frame is configured as a drive roller (20) for the tensioning means (14) and has a drive (23).

3. Palletising apparatus according to claim 1 or 2, characterised in that the tensioning means (14) is a toothed belt, and in that at least the drive roller (20) is configured as a toothed roller which meshes with the toothed belt in a form-locking manner.

4. Palletising apparatus according to one of claims 1 to 3, characterised in that the drive roller (20) is disposed so that the angle at which the tensioning means (14) is looped around the drive roller (20) is 180°.

5. Palletising apparatus according to one of claims 1 to 3, characterised in that the tensioning means (14) is mounted on the frame (1, 2, 3) at one end of the path of displacement of the carriage (4), and in that the counterweights (21) are guided in a hollow frame bar (1) at the other end of the path of displacement of the carriage (4).

## Revendications

1. Palettiseur possédant un bâti composé de barres verticales ou montants (1) et de traverses horizontales (2, 3) qui les relient et sur lesquelles peut se déplacer un chariot (4) supportant un coulisseau de levage (5) mobile verticalement et muni d'une tête porte-outil (6), avec coordination d'un contrepoids (21) au coulisseau de levage (5), ce dernier se présentant une poulie de renvoi (13) pour un élément de traction (14) guidé sur des poulies de renvoi supplémentaires (15 à 20), caractérisé en ce que les deux extrémités du moyen de traction (14) sont fixées à des contrepoids et guidées sur des poulies motrices (20), et que les contrepoids (21) sont guidés sur le bâti (1, 2, 3).

2. Palettiseur selon la revendication 1, caractérisé en ce que l'une des poulies de renvoi portées par le bâti est réalisée comme une poulie motrice (20) pour l'élément de traction (14) et présente un entraînement (23).

3. Palettiseur selon la revendication 1 ou 2, caractérisé en ce que le moyen de traction (14) est une courroie dentée et que la poulie motrice (20) au moins est réalisée comme une poulie dentée engrenant à complementarité de formes avec la courroie dentée.

4. Palettiseur selon une des revendications 1 à 4, caractérisé en ce que la poulie motrice (20) est disposée de manière que l'angle d'enroulement du moyen de traction (14) sur la poulie motrice (20) soit de 180°.

5. Palettiseur selon une des revendications 1 à 3, caractérisé en ce que le moyen de traction (14) est fixé au bâti (1, 2, 3) à une extrémité de la course du chariot (4) et que les contrepoids (21) sont guidés dans un montant creux (1) à l'autre extrémité de la course du chariot (4).
